# FASCICULE DE BREVET EUROPEEN

(11) **EP 2 115 745 B1**
(45) Date de publication et mention de la délivrance du brevet: **29.06.2011**
(21) Numéro de dépôt: 08708690.6
(22) Date de dépôt: 05.02.2008
(51) Int. Cl.: G11B 7/257

(54) **SUPPORT DE STOCKAGE D'INFORMATIONS OPTIQUES A HAUTE RESOLUTION**
HOCHAUFLÖSENDES OPTISCHES INFORMATIONSSPEICHERMEDIUM
HIGH RESOLUTION OPTICAL INFORMATION STORAGE MEDIUM

(30) Priorité: 09.02.2007 FR 0700938
(43) Date de publication de la demande: 11.11.2009
(73) Titulaire: Commissariat à l'Énergie Atomique et aux Énergies Alternatives, 75015 Paris (FR)
(72) Inventeur: HYOT, Bérangère, F-38320 Eybens (FR); POUPINET, Ludovic, F-38360 Sassenage (FR); ANDRE, Bernard, F-38950 Quaix En Chartreuse (FR); CHATON, Patrick, F-38570 Theys (FR)
(74) Mandataire: Guérin, Michel
(86) Numéro de dépôt international: PCT/EP2008/051389
(87) Numéro de publication internationale: WO 2008/101801

(56) Documents cités:
- JP-A- 3 292 632
- JP-A- 7 029 206
- US-A- 5 949 751
- US-A1- 2003 002 428
- US-A1- 2005 254 408

## Description

L'invention concerne le domaine de l'enregistrement optique d'informations.

Lorsqu'on cherche à accroître la densité d'informations enregistrées sur un disque optique, on est en général limité par les performances du dispositif de lecture des informations. Le principe de base est que l'on ne peut que très difficilement lire des informations physiques inscrites dans le disque si leur dimension est inférieure à la limite de résolution du système optique qui servira à lire ces informations. Typiquement, avec une lecture par un laser rouge de longueur d'onde 650nm et une ouverture numérique de 0,6 on ne peut normalement pas espérer lire correctement des informations de dimension inférieure à 0,4 micromètre, à la rigueur 0,3 micromètre.

Cependant, des méthodes dites de super-résolution ont été imaginées pour lire des informations dont la dimension physique est inférieure, voire même très inférieure, à la longueur d'onde. Ces méthodes se fondent sur les propriétés optiques non-linéaires de certains matériaux. Par propriétés non-linéaires, on entend le fait que certaines propriétés optiques du matériau changent en fonction de l'intensité de la lumière qu'ils reçoivent. Le plus souvent, la cause directe de ce changement est l'échauffement thermique dû à cet éclairement: c'est le laser de lecture lui-même qui va modifier localement les propriétés optiques du matériau par des effets thermiques, optique, thermo-optiques et/ou optoélectroniques sur des dimensions plus petites que la dimension du spot laser de lecture ; du fait du changement de propriété, une information optique présente dans ce très petit volume devient détectable alors qu'elle n'aurait pas été détectable sans ce changement.

Le phénomène qu'on exploite est fondé principalement sur deux propriétés du laser de lecture qu'on va utiliser :
- d'une part le laser est focalisé très fortement de manière à présenter une section extrêmement petite (de l'ordre de la longueur d'onde) mais dont la distribution de puissance est gaussienne, très forte en son centre, très atténuée à la périphérie,
- et d'autre part, on choisit une puissance de laser de lecture telle que la densité de puissance sur une petite partie de la section, au centre du faisceau, modifie significativement une propriété optique de la couche, alors que la densité de puissance en dehors de cette petite portion de section ne modifie pas significativement cette propriété optique ; la propriété optique est modifiée dans un sens tendant à permettre la lecture d'une information qui ne serait pas lisible sans cette modification.

Par exemple, la propriété optique qui change est une augmentation de la transmission optique dans le cas où la lecture d'un bit constitué par une marque physique formée sur le disque optique nécessite une transmission du faisceau laser jusqu'à cette marque physique. La couche non-linéaire est alors interposée sur le trajet du faisceau vers la marque physique. Le centre du faisceau laser va pouvoir traverser la couche jusqu'à la marque, du fait qu'en traversant la couche l'intensité de la lumière incidente la rend plus transparente, alors que la périphérie du faisceau ne va pas traverser car elle ne modifie pas suffisamment les indices optiques de la couche pour la rendre plus transparente. Tout se passe alors comme si on avait utilisé un faisceau focalisé sur un diamètre beaucoup plus étroit que ce que permet sa longueur d'onde.

Diverses propositions théoriques ont été formulées pour mettre en oeuvre ces principes, mais aucune n'a donné lieu à un développement industriel. Le brevet US 5 153 873 rappelle la théorie. Le brevet US 5 381 391 donne l'exemple d'un film ayant des propriétés de réflectivité non-linéaires. Le brevet US 5 569 517 propose divers matériaux à changement de phase cristalline.

Parmi les techniques qui offrent actuellement les plus grandes possibilités, il y a l'utilisation d'une couche d'oxyde de platine (PtOₓ) enserrée entre deux couches de composé de sulfure de zinc et d'oxyde de silicium, l'ensemble étant inséré entre deux couches de composé AgInSbTe ou GeSbTe et l'ensemble étant à nouveau inséré entre des couches de composé de sulfure de zinc et d'oxyde de silicium. Le matériau AgInSbTe ou GeSbTe présente des propriétés de changement de phase sous l'effet d'un éclairement laser intense. On trouvera des exemples dans Applied Physics letters vol. 83, N°9, Sept 2003 Jooho Kim et autres, "Super-Resolution by elliptical bubble formation with PtOx and AgInSbTe layers", ainsi que dans le Japanese Journal of Applied Physics vol. 43, N°7B, 2004, Jooho Kim et autres "Signal Characteristics of Super-Resolution Near-Field Structure Disk in Blue Laser System", et dans la même revue, Duseop Yoon et autres, "Super-Resolution Read-Only Memory Disc Using Super-Resolution Near-Field Structure Technology".

Les structures décrites dans ces articles reposent principalement sur la constitution de bulles d'expansion de l'oxyde de platine, confinées entre les couches qui les enserrent. Ces bulles sont formées lors de l'écriture laser et elles peuvent être reconnues lors de la lecture, même avec un laser de lecture de longueur d'onde égale à plusieurs fois la dimension des bulles.

Mais ces structures sont difficiles à réaliser et le contrôle du volume des bulles est particulièrement délicat. Le réglage de la puissance laser pour obtenir l'effet de super-résolution en lecture est également particulièrement difficile, une puissance laser trop faible ne donnant aucun résultat et une puissance laser trop forte réduisant considérablement le nombre de cycles de lecture possible.

L'invention propose une structure beaucoup plus simple, plus facile à mettre en oeuvre, nécessitant des puissances laser de lecture raisonnables, et pouvant subir de nombreux cycles de lecture sans dégradation sensible du signal de lecture. La structure selon l'invention repose directement sur les propriétés non-linéaires de certains matériaux sans qu'il soit nécessaire de les soumettre à un régime d'expansion en bulles trop difficile à maîtriser.

Selon l'invention, on propose une structure de stockage optique d'informations à haute résolution, comprenant un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂), caractérisée en ce que l'épaisseur de la couche d'antimoniure InSb ou GaSb est de 10 à 50 nanomètres.

On a constaté que la présence des couches de ZnS-SiO₂ autour de cette couche d'antimoniure permettait de réduire considérablement la puissance laser de lecture nécessaire pour lire les informations en super-résolution avec un rapport signal/bruit satisfaisant. Or la question de la puissance de lecture est critique car, d'un côté, une puissance relativement élevée est nécessaire pour obtenir un effet de super-résolution par changement localisé de propriétés optiques, mais d'un autre côté une puissance élevée tend à détruire progressivement l'information enregistrée, limitant le nombre de cycles de lecture possible alors qu'on souhaite un nombre de cycles de lecture aussi élevé que possible.

De préférence, le substrat est en polycarbonate, en matériau plastique, en polymère.

Les proportions atomiques d'antimoine dans le composé sont de préférence d'environ 45% à 55% ; la proportion d'indium ou de gallium est alors comprise entre 45% et le complément à 100% de la proportion d'antimoine. Un composé stoechiométrique In₅₀Sb₅₀ ou Ga₅₀Sb₅₀ convient bien, mais de petits écarts à la stoechiométrie sont acceptables.

L'épaisseur de la couche InSb ou GaSb est de préférence d'environ 10 à 50 nanomètres, et, de manière optimale, entre 20 et 30 nanomètres.

Les couches diélectriques de ZnS-SiO₂ ont de préférence chacune une épaisseur comprise entre 20 et 100 nanomètres, et, de manière optimale, entre 50 et 70 nanomètres. La proportion atomique de ZnS et de SiO₂ est de préférence choisie dans la gamme entre ZnS_{85at%}-SiO_{2 15at%} (proportion 85/15) et ZnS_{70at%}-SiO_{2 30at%} (proportion 70/30).

L'invention est particulièrement applicable pour la lecture d'informations à partir d'un laser bleu, typiquement avec une longueur d'onde d'environ 400 nanomètres, les informations préenregistrées sur le disque optique pouvant alors avoir une dimension (largeur et longueur) de 100 nanomètres ou moins, c'est-à-dire quatre à cinq fois moins que la longueur d'onde de lecture. Mais l'invention est applicable aussi pour la lecture à partir d'un laser rouge (longueurs d'onde de 600 à 800 nanomètres), ce qui est très intéressant pour permettre la compatibilité avec les lecteurs de disque optiques classiques de résolution standard : un même lecteur à laser rouge peut lire des disques portant des informations de résolution standard et des disques portant des informations en super-résolution. Dans ce cas, les marques physiques enregistrées sur le substrat du disque optique peuvent avoir une dimension (largeur et longueur) de 200 nanomètres ou moins.

On notera que la demande non publiée EP 1912216 décrit une structure avec une couche d'antimoniure d'indium entre deux couches de ZnS-SiO₂; les épaisseurs de couches ne sont pas spécifiées.

D'autres caractéristiques et avantages de l'invention apparaîtront à la lecture de la description détaillée qui suit et qui est faite en référence aux dessins annexés dans lesquels:
- la figure 1 représente la structure de stockage d'informations optiques selon l'invention ;
- la figure 2 représente une courbe de réflectivité et de transmission mesurée pour cette structure, en fonction de la puissance du laser de lecture ;
- la figure 3 représente deux courbes de réflectivité mesurées en fonction de la puissance du laser de lecture, pour le cas de InSb et pour le cas de GaSb respectivement ;
- la figure 4 représente une vue au microscope à force atomique d'un substrat dans lequel ont été préformées des marques de 80 nanomètres minimum espacées de 80 nanomètres minimum ;
- la figure 5 représente des courbes indiquant le rapport signal/bruit dans des structures conformes à l'invention ;
- la figure 6 représente une courbe de rapport signal/bruit comparée, tracée pour diverses substances diélectriques encadrant une couche d'antimoniure d'indium.

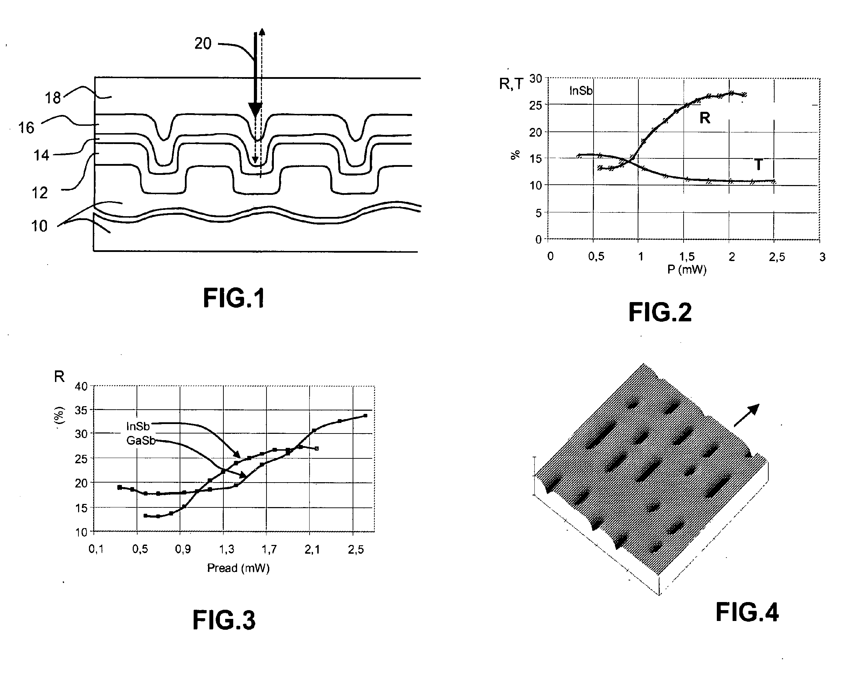

Sur la figure 1, on a représenté la structure générale du support de stockage optique d'informations selon l'invention. Il comprend un substrat 10, qui est de préférence un matériau organique, et notamment du polycarbonate classiquement utilisé pour des disques optiques. Le substrat sera en pratique en forme de disque plan et les informations sont classiquement inscrites dans le disque sur des pistes sensiblement concentriques ; un faisceau laser de lecture, symbolisé par la flèche 20, placé devant le disque, verra les informations défiler devant lui lors de la rotation du disque.

Le substrat 10 comporte des marques physiques définissant l'information enregistrée, et dans cet exemple, les marques physiques sont constituées sous forme d'un relief imprimé à la surface supérieure du substrat. Le relief est par exemple constitué de creux dont la largeur est à peu près fixe pour toutes les informations inscrites, mais dont la longueur et l'espacement, dans le sens de défilement des informations, définissent le contenu de l'information inscrite. La lecture des informations se fait par analyse de la phase du faisceau laser réfléchi par la structure, phase qui varie au début et à la fin du passage de chaque marque physique. Les creux peuvent être préenregistrés par pressage du polycarbonate ou du substrat plastique par exemple à l'aide d'un moule en nickel qui a été réalisé à partir d'outils de gravure à faisceaux d'électrons de très haute résolution.

La largeur, la longueur, l'espacement des marques physiques peuvent être inférieures à la résolution optique théorique du système optique de lecture qui servira à les lire. Typiquement, s'il s'agit d'un laser bleu de longueur d'onde 400 nanomètres environ, utilisé avec une optique de focalisation dont l'ouverture numérique est de 0,85, la limite physique théorique de résolution est de l'ordre de 120 nanomètres en prenant des précautions. Ici, les marques peuvent être préenregistrées avec une résolution, en longueur ou en espacement, inférieure à 80 nanomètres comme on le verra.

Dans le cas d'un disque optique classique, on recouvrirait le relief d'une simple couche d'aluminium, mais cette couche d'aluminium ne permettrait pas de détecter avec un laser bleu des marques de dimensions et d'espacement égal à 80 nanomètres.

Selon l'invention, on recouvre les marques d'une triple couche constituée dans l'ordre par une couche diélectrique 12 de composé ZnS-SiO₂, une couche 14 d'antimoniure d'indium (InSb) ou antimoniure de gallium (GaSb), et une couche diélectrique 16 de composé ZnS-SiO₂. L'ensemble est recouvert par une couche de protection transparente 18.

La couche 14 en InSb ou GaSb est une couche à propriétés optiques non linéaires, et on a constaté que le pouvoir de réflexion de la structure tri-couche, couche GaSb ou InSb encadrée par les deux couches diélectriques ZnS-SiO₂, pouvait augmenter très significativement lorsqu'elle est illuminée par un faisceau laser d'une puissance de 1 à 2 milliwatts (correspondant en pratique à une densité de puissance d'environ 7 milliwatts par micromètre carré).

La figure 2 représente à titre indicatif une courbe de variation de réflectivité (courbe du haut R) et de transmission (courbe du bas T) de la structure substrat + triple couche + couche de protection 18 en fonction de la puissance d'un laser d'illumination à 405 nanomètres. La couche inférieure 12 de Zns-SiO₂ a une épaisseur de 70 nanomètres, elle contient environ 80% de ZnS pour 20% de SiO₂ (en pourcentage atomique). La couche supérieure16 a la même composition et une épaisseur de 50 nanomètres. La couche intermédiaire est en InSb d'épaisseur 20 nanomètres et de composition sensiblement stoechiométrique. Cet exemple de mesure montre que la réflectivité de la structure superposée varie beaucoup avec la puissance d'illumination. Par conséquent, avec un laser de lecture d'une puissance d'environ 1,3 mW, du fait de la distribution gaussienne de l'énergie du faisceau, le pouvoir de réflexion variera considérablement entre le centre et la périphérie de la tache focale, d'où la possibilité d'un effet de super-résolution très marqué.

La figure 3 représente une autre mesure, qui est une mesure de réflectivité comparative pour la structure définie au paragraphe précédent et pour une structure identique dans laquelle InSb est remplacé par GaSb. Les résultats pour GaSb sont moins bons en ce sens qu'ils nécessitent une puissance de lecture supérieure ; cependant, la plage de puissances utilisables est plus grande.

La figure 4 rappelle la manière dont peuvent être constituées les informations préenregistrées sur le substrat, avant dépôt de la superposition de trois couches 12, 14, 16 : trous borgnes de longueur et d'espacement variables. La flèche indique le sens de défilement du substrat sous le laser de lecture.

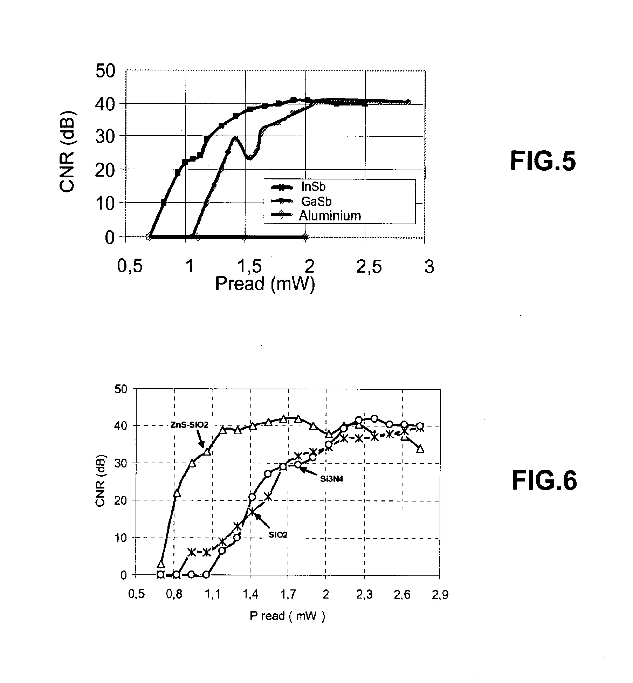

La figure 5 représente une mesure en décibels du rapport signal/bruit (ou "Carrier Noise Ratio") CNR en fonction de la puissance du laser de lecture, dans le cas d'un substrat sur lequel on a formé des marques régulières de dimensions 80nm et d'espacement 80 nanomètres, donnant donc lieu en théorie à une fréquence constante du signal de sortie du système de lecture laser. Ces marques sont recouvertes par la triple couche mentionnée précédemment, la couche active de 20 nanomètres étant soit InSb soit GaSb. A titre indicatif, le rapport CNR est nul (les marques ne sont pas du tout détectées) si les marques sont recouvertes par 25 à 40 nanomètres d'aluminium (comme dans un disque optique ROM) plutôt que par la triple couche selon l'invention. On voit encore sur cette courbe que l'antimoniure d'indium est plus favorable que l'antimoniure de gallium du point de vue de la puissance puisque le rapport est de près de 35dB pour une puissance de 1,3 mW alors qu'il faut plutôt 2 milliwatts pour GaSb pour obtenir le même rapport.

La figure 6 représente une autre mesure comparative de ce rapport CNR, sur trois échantillons de substrat avec marques préenregistrées régulières de 80nm espacées de 80 nm, identiques dans les trois échantillons. Seule la courbe de gauche utilise des couches diélectriques de composé ZnS-SiO₂; les deux courbes de droite utilisent respectivement comme diélectrique de l'oxyde de silicium SiO₂ et du nitrure de silicium Si₃N₄. La couche optique non linéaire est ici de l'antimoniure d'indium InSb. On voit qu'il faut une puissance de lecture beaucoup moins importante dans le cas de l'invention, avec des couches ZnS-SiO₂, pour atteindre un rapport CNR élevé.

Enfin, on a étudié expérimentalement le comportement en lecture multiples de l'information uniforme ainsi enregistrée pour les trois structures, l'une étant celle de l'invention, les autres utilisant comme couches diélectriques SiO₂ ou Si₃N₄. Avec SiO₂ on a pu lire les informations avec un rapport signal/bruit suffisant pour une puissance de 2,74 milliwatts et on a constaté une dégradation du signal lu après 34 cycles de lecture. Avec Si₃N₄, on a pu lire avec une puissance de 2,26 milliwatts et on a constaté une dégradation après 240 cycles de lecture. Avec les couches de ZnS-SiO₂ proposées selon l'invention, on a pu lire à une puissance de 1,66 mW et on n'a pas constaté de dégradation significative du signal jusqu'à 8000 cycles de lecture. On mesure donc l'importance de la structure proposée comparativement à d'autres structures essayées, malgré son caractère inattendu puisqu'elle repose apparemment sur l'augmentation en super-résolution de la réfléctivité de la structure et non sur l'augmentation de la transmission qu'on aurait pu penser plus favorable que la réflexion sachant qu'on doit lire des marques physiques situées au-dessous de la structure tricouche.

Les essais effectués ont montré que, aussi bien pour un laser bleu que pour un laser rouge, les épaisseurs optimales des couches de la structure selon l'invention sont les suivantes :
- couche inférieure de ZnS-SiO2 : environ 50 à 70 nanomètres;
- couche GaSb ou InSb : environ 20 à 30 nanomètres;
- couche supérieure de ZnS-SiO₂ : environ 50 à 60 nanomètres.

La composition atomique préférée pour le composé ZnS-SiO₂ est d'environ 80% de ZnS pour 20% de SiO₂.

Le dépôt des couches ne pose pas de problème particulier ; il peut être fait classiquement par pulvérisation cathodique à partir d'une cible comportant les matériaux considérés, aussi bien pour la couche active que pour les diélectriques, ou par dépôt en phase vapeur assisté par plasma.

## Revendications

1. Structure de stockage optique d'informations à haute résolution, comprenant un substrat (10) pourvu de marques physiques dont la configuration géométrique définit l'information enregistrée, une superposition de trois couches (12, 14, 16) au-dessus des marques du substrat, et une couche de protection transparente (18) au-dessus de cette superposition, la superposition comprenant une couche d'antimoniure d'indium ou de gallium (14) insérée entre deux couches diélectriques (12, 16) de Zns-SiO₂, **caractérisée en ce que** l'épaisseur de la couche d'antimoniure InSb ou GaSb est de 10 à 50 nanomètres.

2. Structure selon la revendication 1, **caractérisée en ce que** les proportions atomiques d'antimoine dans la couche d'antimoniure (14) sont de 45% à 55%, la proportion d'indium ou de gallium étant comprise entre 45% et le complément à 100% de la proportion d'antimoine

3. Structure selon la revendication 2, **caractérisée en ce que** la couche d'antimoniure (14) est une couche stoechiométrique InSb ou GaSb.

4. Structure selon l'une des revendications 1 à 3, **caractérisée en ce que** l'épaisseur de la couche d'antimoniure InSb ou GaSb est de 20 à 30 nanomètres.

5. Structure selon l'une des revendications 1 à 4, **caractérisée en ce que** les couches diélectriques de ZnS-SiO₂ ont chacune une épaisseur comprise entre 20 et 100 nanomètres.

6. Structure selon la revendication 5, **caractérisée en ce que** la couche inférieure (12) de ZnS-SiO₂ recouvrant les marques du substrat a une épaisseur d'environ 50 à 70 nanomètres.

7. Structure selon l'une des revendications 5 et 6, **caractérisée en ce que** la couche supérieure (16) de ZnS-SiO₂ a une épaisseur d'environ 50 à 60 nanomètres.

8. Structure selon l'une des revendications 1 à 7, **caractérisée en ce que** la proportion atomique de ZnS et de SiO₂ est choisie dans la gamme entre ZnS_{85at%}-SiO_{2 15at%} (proportion 80/20) et ZnS_{70at%}-SiO_{2 30at%} (proportion 70/30).

9. Structure selon l'une des revendications 1 à 8, **caractérisée en ce que** le substrat est en polycarbonate.

10. Structure selon l'une des revendications 1 à 9, **caractérisée en ce que** les marques physiques enregistrées sur le substrat sont des creux imprimés par matriçage.

11. Application de la structure selon l'une des revendications précédentes à la fabrication d'un disque optique destiné à être lu en super-résolution par un lecteur à laser bleu, certaines des marques physiques ayant une longueur et une largeur inférieures à 100 nanomètres.

12. Application de la structure selon l'une des revendications précédentes à la fabrication d'un disque optique destiné à être lu en super-résolution par un lecteur à laser rouge, les marques physiques ayant une longueur et une largeur inférieures à 200 nanomètres.

## Claims

1. High-resolution optical information storage structure, comprising a substrate (10) provided with physical marks, the geometric configuration of which defines the information recorded, a superposition of three layers (12, 14, 16) over the top of the marks on the substrate, and a transparent protective layer (18) over the top of this superposition, the superposition comprising an indium antimonide or gallium antimonide layer (14) inserted between two ZnS/SiO₂ dielectric layers (12, 16), **characterized in that** the thickness of the INSB or GaSb antimonide layer is from 10 to 50 nanometers.

2. Structure according to claim 1, **characterized in that** the atomic proportion of antimony in the antimonide layer (14) is 45% to 55%, the indium or gallium proportion being between 45% and the balance to 100% being the antimony proportion.

3. Structure according to claim 2, **characterized in that** the antimonide layer (14) is a stoichiometric InSb or GaSb layer.

4. Structure according to one of claims 1 to 3, **characterized in that** the thickness of the InSb or GaSb antimonide layer is from 20 to 30 nanometres.

5. Structure according to one of claims 1 to 4, **characterized in that** the ZnS/SiO₂ dielectric layers each have a thickness of between 20 and 100 nanometres.

6. Structure according to claim 5, **characterized in that** the lower ZnS/SiO₂ layer (12) covering the marks on the substrate has a thickness of about 50 to 70 nanometres.

7. Structure according to either of claims 5 and 6, **characterized in that** the upper ZnS/SiO₂ layer (16) has a thickness of about 50 to 60 nanometres.

8. Structure according to one of claims 1 to 7, **characterized in that** the atomic proportion of ZnS and SiO₂ is chosen in the range between ZnS_{85at%}/SiO_{2 15at%} (85/15 proportion) and ZnS_{70at%}/SiO_{2 30at%} (70/30 proportion).

9. Structure according to one of claims 1 to 8, **characterized in that** the substrate is made of polycarbonate.

10. Structure according to one of claims 1 to 9, **characterized in that** the physical marks recorded on the substrate are stamping-impressed pits.

11. Application of the structure according to one of the preceding claims to the fabrication of an optical disc intended to be read in the super-resolution by a blue-laser reader, some of the physical marks having a length and a width of less than 100 nanometres.

12. Application of the structure according to one of the preceding claims to the fabrication of an optical disc intended to be read in the super-resolution by a red-laser reader, some of the physical marks having a length and a width of less than 200 nanometres.

## Patentansprüche

1. Hochauflösende optische Informationsspeicherstruktur, die ein mit physikalischen Markierungen ausgestattetes Substrat (10) umfasst, deren geometrische Konfiguration die gespeicherte Information definiert, eine Schichtung von drei Schichten (12, 14, 16) über den Substratmarkierungen und eine durchsichtige Schutzschicht (18) über dieser Schichtung, wobei die Schichtung eine Indium- oder Galliumantimonidschicht (14) zwischen zwei dielektrischen Zns-SiO₂-Schichten (12, 16) umfasst, **dadurch gekennzeichnet, dass** die Dicke der InSb- oder GaSb-Antimonidschicht 10 bis 50 Nanometer beträgt.

2. Struktur nach Anspruch 1, **dadurch gekennzeichnet, dass** die Antimon-Atomanteile in der Antimonidschicht (14) 45 % bis 55 % betragen, wobei der Indium-oder Galliumanteil zwischen 45 % und der Ergänzung auf 100 % des Antimonanteils inklusive beträgt.

3. Struktur nach Anspruch 2, **dadurch gekennzeichnet, dass** die Antimonidschicht (14) eine stöchiometrische InSb- oder GaSb-Schicht ist.

4. Struktur nach einem der Ansprüche 1 bis 3, **dadurch gekennzeichnet, dass** die Dicke der InSb- oder GaSb-Antimonidschicht 20 bis 30 Nanometer beträgt.

5. Struktur nach einem der Ansprüche 1 bis 4, **dadurch gekennzeichnet, dass** die dieletrischen ZnS-SiO₂-Schichten jeweils eine Dicke zwischen 20 und 100 Nanometern inklusive haben.

6. Struktur nach Anspruch 5, **dadurch gekennzeichnet, dass** die untere ZnS-SiO₂-Schicht (12), die die Substratmarkierungen bedeckt, eine Dicke von zirka 50 bis 70 Nanometern hat.

7. Struktur nach einem der Ansprüche 5 und 6, **dadurch gekennzeichnet, dass** die obere ZnS-SiO₂-Schicht (16) eine Dicke von zirka 50 bis 60 Nanometern hat.

8. Struktur nach einem der Ansprüche 1 bis 7, **dadurch gekennzeichnet, dass** der Atomanteil von ZnS und von SiO₂ aus dem Bereich zwischen ZnS_{85t%}-SiO_{2 15at%} (Verhältnis 80/20) und ZnS_{70at%}-SiO_{2 30at%} (Verhältnis 70/30) ausgewählt ist.

9. Struktur nach einem der Ansprüche 1 bis 8, **dadurch gekennzeichnet, dass** das Substrat aus Polycarbonat ist.

10. Struktur nach einem der Ansprüche 1 bis 9, **dadurch gekennzeichnet, dass** die auf dem Substrat gespeicherten physikalischen Markierungen durch Prägen gedruckte Aussparungen sind.

11. Anwendung der Struktur nach einem der vorangehenden Ansprüche auf die Herstellung einer optischen Scheibe, die dazu bestimmt ist, von einem Blue-Ray-Player superauflösend gelesen zu werden, wobei einige der physikalischen Markierungen eine Länge und eine Breite von unter 100 Nanometer haben.

12. Anwendung der Struktur nach einem der vorangehenden Ansprüche auf die Herstellung einer optischen Scheibe, die dazu bestimmt ist, von einem Red-Ray-Player superauflösend gelesen zu werden, wobei die physikalischen Markierungen eine Länge und eine Breite von unter 200 Nanometer haben.
